# EUROPEAN PATENT APPLICATION

(11) **EP 4 513 286 A1**
(43) Date of publication of application: **26.02.2025**
(21) Application number: 24185945.3
(22) Date of filing: 02.07.2024
(51) Int. Cl.: G05B 19/418, G06Q 50/04

(54) **COMPUTATION PROGRAM, COMPUTATION METHOD, AND INFORMATION PROCESSING APPARATUS**

(30) Priority: 22.08.2023 JP 2023134846
(71) Applicant: Fujitsu Limited, Kawasaki-shi, Kanagawa 211-8588 (JP)
(72) Inventor: SHIMADA, Daichi, Kawasaki-shi, Kanagawa 211-8588 (JP); GOTSUBO, Kenji, Kawasaki-shi, Kanagawa 211-8588 (JP); SHIGEZUMI, Junichi, Kawasaki-shi, Kanagawa 211-8588 (JP)
(74) Representative: Hoffmann Eitle

(57) **Abstract**

A computation program comprising instructions which, when executed by a computer, cause the computer to execute: on a condition that each of objects is processed at any of a plurality of processing timings for which an order is determined, a processing specification is determined for each of the objects, a processing period in which processing is performed for each of the objects is determined, and the processing period includes one or more of the processing timings, calculating a probability obtained as a reciprocal of a number of the processing timings included in the processing period for each of the processing specifications of the objects, for each processing timing; calculating a sum of probabilities of the processing specifications for each processing timing; and calculating a cumulative sum of sums of the probabilities for the processing timing; and specifying the processing timings of the objects by using the cumulative sum.

## Description

### FIELD

TheA embodiment discussed herein is related to a computer-readable recording medium storing a computation program, a computation method, and an information processing apparatus.

### BACKGROUND

A step planning for sequentially performing processing on a plurality of types of objects is performed.

Japanese Laid-open Patent Publication Nos. 2005-107735, 2022-6819, 2007-34429, 2018-165952, 2020-194587, and 2008-198129 are disclosed as related art.

### SUMMARY

### TECHNICAL PROBLEM

For example, a specification constraint is defined in which a plurality of objects are sequentially input to one processing line in accordance with a predetermined order, and processing according to a specification defined for each object is performed. In this case, in order to level a frequency of each specification, it is considered to level each specification by using a target tracking method.

On the other hand, consideration of a constraint condition (period constraint) that a certain object may be processed only within a certain period is also desired. It is difficult to plan a production order that satisfies the specification constraint while observing the period constraint.

In one aspect, an object of the present disclosure is to provide a computer-readable recording medium storing a computation program, a computation method, and an information processing apparatus capable of planning a processing order for a plurality of objects.

### SOLUTION TO PROBLEM

According to an aspect of the embodiments, there is provided a computation program comprising instructions which, when executed by a computer, cause the computer to execute computation processing including: on a condition that each of a plurality of objects is processed at any of a plurality of processing timings for which an order is determined, a processing specification is determined for each of the plurality of objects, a processing period in which processing is performed for each of the plurality of objects is determined, and the processing period includes one or more of the processing timings, calculating a probability obtained as a reciprocal of a number of the processing timings included in the processing period for each of the processing specifications of the plurality of objects, for each processing timing; calculating a sum of probabilities of the processing specifications for each processing timing; and calculating a cumulative sum of sums of the probabilities for the processing timing; and specifying the processing timings of the plurality of objects by using the cumulative sum.

### ADVANTAGEOUS EFFECTS OF INVENTION

A computer-readable recording medium storing a computation program, a computation method, and an information processing apparatus capable of planning a processing order for a plurality of objects may be provided.

### BRIEF DESCRIPTION OF DRAWINGS

FIG. 1 is a diagram illustrating product data;
FIG. 2 is a diagram illustrating a production period;
FIG. 3 is a planning example of a production order;
FIG. 4 is an example in which the production order is determined from a slot 1 to a slot 4 such that a cumulative number of appearances of each specification approaches a target number of appearances as much as possible;
FIG. 5 is a diagram illustrating a determination reference when a product of a slot 5 is selected;
FIG. 6 is a diagram illustrating a case where there is no partial overlap in period constraints of respective products;
FIG. 7 is a diagram illustrating a case where there is partial overlap in the period constraints of respective products;
FIG. 8 is a diagram illustrating product data;
FIG. 9 is a diagram illustrating a probability distribution;
FIG. 10A is a block diagram illustrating an overall configuration of an information processing apparatus according to a first embodiment, and FIG. 10B is a block diagram illustrating a hardware configuration of the information processing apparatus;
FIG. 11 is a flowchart illustrating an example of processing that is executed by the information processing apparatus;
FIG. 12 is a diagram illustrating a flowchart representing details of step S2;
FIG. 13 is a diagram illustrating a flowchart representing details of step S3;
FIG. 14 is a diagram illustrating a flowchart representing details of step S4;
FIG. 15 is a diagram illustrating a flowchart representing details of order specification processing in step S41;
FIG. 16 is a probability distribution obtained for the product data in FIG. 1;
FIG. 17 is a production order planned by a method of the first embodiment;
FIG. 18 is a diagram for comparing production orders;
FIG. 19 is a diagram illustrating tally calculation; and
FIG. 20 is a diagram illustrating an operation device.

### DESCRIPTION OF EMBODIMENTS

Production lines for personal computers, automobiles, and the like adopt a mixed production method in which a plurality of types of products are mixed in one production line to assemble the products. In the mixed production method, different products flow in order in the same production line. In this case, when there is an imbalance in a production order of the products, quality, cost, and productivity are greatly affected. For example, when production of the same product continues, there is a risk that an error may occur due to a decrease in concentration of a worker. When production of the same product continues, there is a risk that out-of-stock of components may occur due to unevenness in component supply frequency.

Accordingly, in the mixed production method, it is desirable to plan a production order by considering constraint conditions (specification constraints) such that various specifications of the products do not appear in an imbalanced manner. A constraint condition (period constraint) that a certain product may be produced only within a certain period has to be considered due to a production plan, a shift of a worker, or the like.

In recent years, specification constraints have become complicated due to diversification of products, and it has become difficult to plan a production order that satisfies the specification constraints while observing the period constraint.

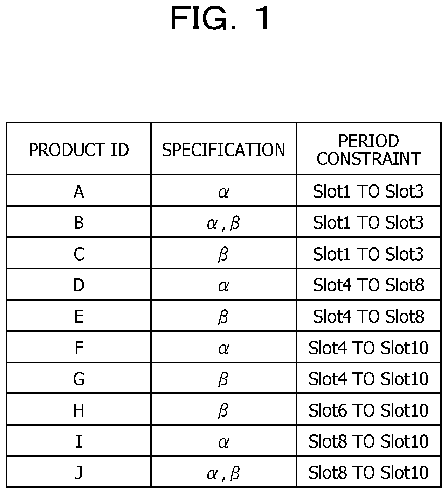

FIG. 1 is a diagram illustrating product data. For example, as illustrated in FIG. 1, specification constraints are defined for each product of products A to J. For example, a product A, a product D, a product F, and a product I have to be processed with the same specification a. A product C, a product F, a product G, and a product H have to be processed with the same specification β. A product B and a product J have to be processed with the same specifications α and β.

A period constraint is defined for each product of the products A to J. For example, the products A to C have to be input to a production line at any of slots 1 to 3. The products D and E have to be input to a production line at any of slots 4 to 8. The products F and G have to be input to a production line at any of slots 4 to 10. The product H has to be input to a production line at any of slots 6 to 10. The products I and J have to be input to a production line at any of slots 8 to 10.

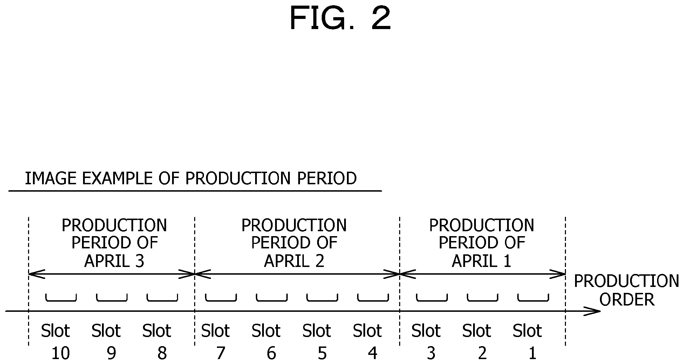

A slot represents an input turn to a production line. A slot number is a number of the input turn, and corresponds to an input order to the production line. Accordingly, the slot corresponds to a processing timing in the production line. Defining a slot for each product corresponds to defining a constraint on a processing period in each production line. For each product, the processing period includes one or more slots. In the example illustrated in FIG. 1, the processing period includes a plurality of slots for each product. One product is input to a production line at single slot. For example, as illustrated in FIG. 2, on April 1, one product is input at an input turn of the slot 1, one product is input at an input turn of the next slot 2, and one product is input at an input turn of the next slot 3. The number of slots per day may not be fixed. In the example of FIG. 2, the number of slots on April 1 and April 3 is 3, and the number of slots on April 2 is 4.

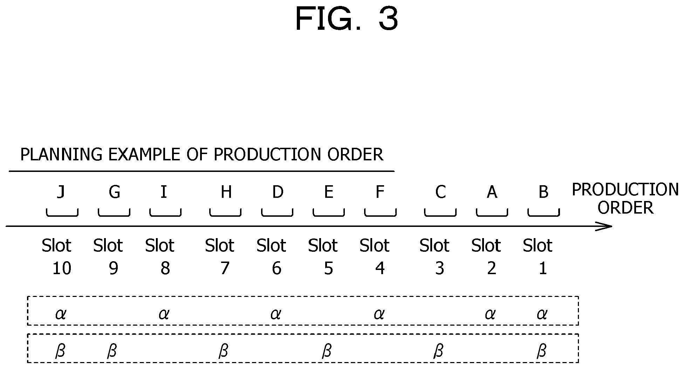

FIG. 3 is an example of planning a production order. In the example illustrated in FIG. 3, a product B is input at a slot 1, a product A is input at a slot 2, a product C is input at a slot 3, and a product F is input at a slot 4, for the production line. In the example illustrated in FIG. 3, the production order is determined such that the same specifications are not consecutive as much as possible.

A target tracking method will be described as an example of a method for determining the production order such that the same specifications are not consecutive as much as possible. The target tracking method is a method of sequentially determining an appearance order of products such that a cumulative number of appearances of each specification over a production line approaches a target number of appearances as much as possible. For example, the target number of appearances is calculated as an average number of appearances (= a number of appearances of a specification/a number of all slots).

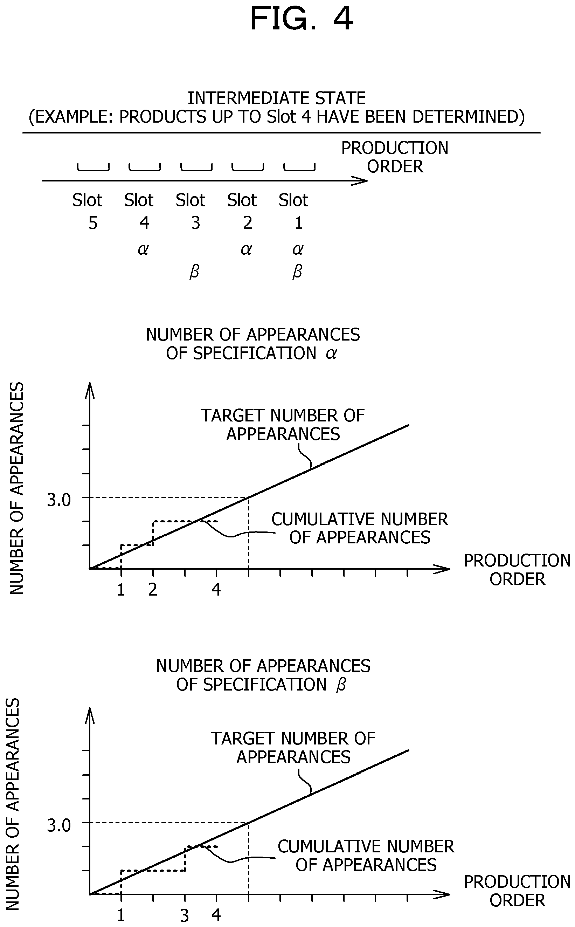

For example, it is assumed that a specification of each product is defined as illustrated in FIG. 1. FIG. 4 is an example in which the production order is determined from the slot 1 to the slot 4 such that the cumulative number of appearances of each specification approaches the target number of appearances as much as possible in this case. As illustrated in FIG. 4, the production order of the products is determined from the slot 1 to the slot 4 such that the cumulative number of appearances of the specification α approaches the target number of appearances as much as possible. The production order of the products is determined from the slot 1 to the slot 4 such that the cumulative number of appearances of the specification β approaches the target number of appearances as much as possible.

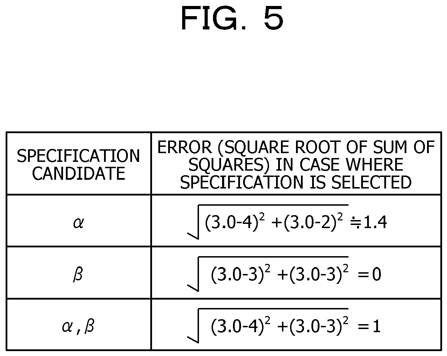

FIG. 5 is a diagram illustrating a determination reference when a product of the slot 5 is selected. As illustrated in FIG. 5, an error (square root of sum of squares) of each specification in a case where the next product is selected is calculated. In this case, a product is selected from among the products E, G, and H having the specification β with a smallest error. As described above, the cumulative number of appearances of each specification approaches the target number of appearances.

However, in such a target tracking method, only the constraint of the specification is considered, and the period constraint may not be observed.

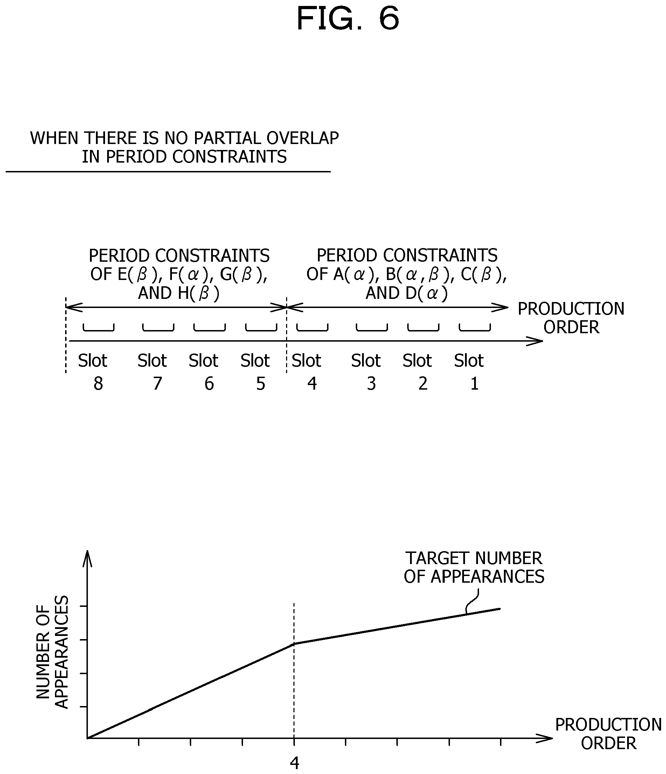

Accordingly, a method of creating the target number of appearances in the target tracking method for each period constraint will be examined. For example, slots are grouped and sectioned by a period constraint, and a target number of appearances is created for each group. For example, as illustrated in FIG. 6, it is assumed that the products A to D are input at any of the slots 1 to 4, and the products E to H are input at any of the slots 5 to 8. In this case, the target number of appearances in a certain section is defined as (a number of specifications in the section)/(a number of slots in the section). For example, the target number of appearances in the slots 1 to 4 is defined as (a number of specifications from slots 1 to 4)/4. In this case, as illustrated in FIG. 6, a production order may be determined by the target tracking method.

However, the example of FIG. 6 is a case where there is no partial overlap in the period constraints of respective products. For example, in a case where two certain period constraints partially overlap (partial overlap), unless a product to be allocated to each section is appropriately determined in advance, a production order that satisfies the specification constraint may not be determined.

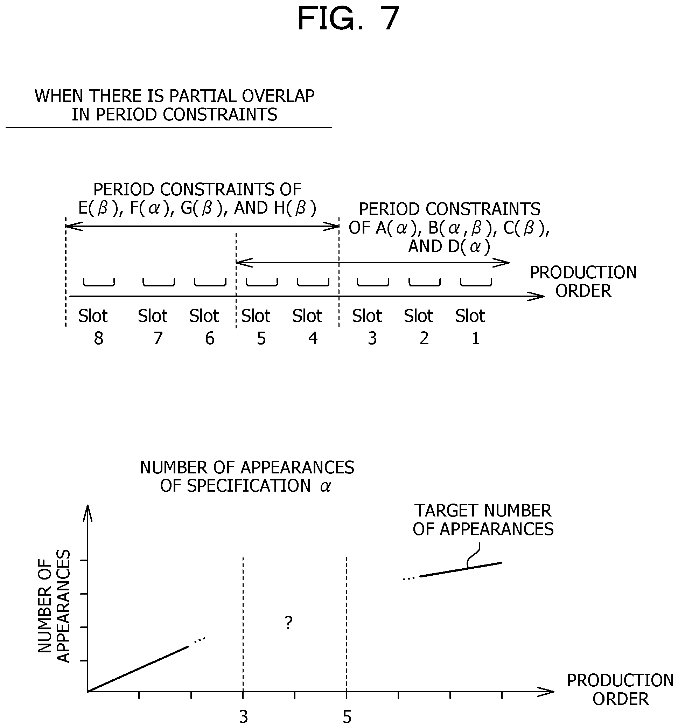

FIG. 7 is a diagram illustrating a case where there is partial overlap in the period constraints of respective products. In the example of FIG. 7, the period constraints of the products A to D are the slots 1 to 5, and the period constraints of the products E to H are the slots 4 to 8. In this case, the slots 4 and 5 partially overlap between the products A to D and the products E to H.

In this case, since the target number of appearances may not be derived unless the number of specifications included in each section is known, it is desirable to allocate a product in advance. In a case where the product allocation is not appropriate, the target number of appearances becomes inappropriate, and the specification constraint may not be satisfied. As described above, in a case where the period constraints partially overlap, a production order may not be determined by the target tracking method.

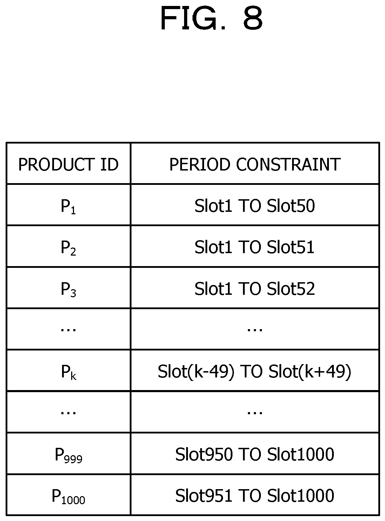

Accordingly, to obtain a production order that satisfies a specification constraint while observing a period constraint, it is considered to try all patterns of products to be allocated to each section. However, in this case, the calculation time becomes enormous. For example, in a case of automobile production, since a product having a scale of 1000 vehicles per day is produced, constraints on production periods are set for the respective vehicles, and the respective period constraints may partially overlap each other. For example, in a case of product data in FIG. 8, since product allocation patterns to each section are about 50⁹⁵⁰ × 50! patterns, when it is assumed that it takes one second for one target tracking method, calculation takes about 10¹⁵⁸⁴ seconds.

In the following embodiment, an example will be described in which the production order may be calculated in a short time even when partial overlap occurs in the period constraints of respective products.

### [First Embodiment]

First, a principle of a first embodiment will be described. As described in FIG. 1, it is assumed that product data is determined. In the example in FIG. 1, the period constraints of the products A to D are the slots 1 to 5, and the period constraints of the products E to H are the slots 4 to 8. In this case, the slots 4 and 5 partially overlap between the products A to D and the products E to H.

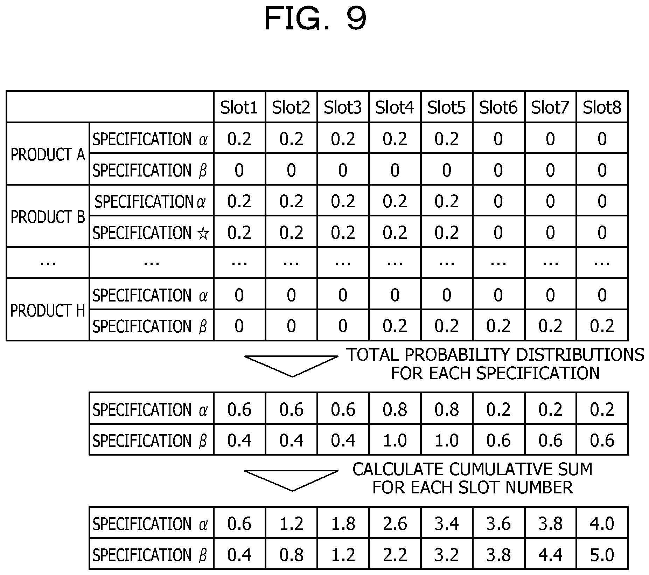

In this case, as illustrated in FIG. 9, a probability distribution of each specification in consideration of the period constraint is calculated for each product. For example, a sum of probabilities of respective specifications is calculated for each slot number, and a cumulative sum thereof is calculated to create a target number of appearances in consideration of the period constraint.

For example, for the product A, since the specification is only the specification o, the probability for each of the slots 1 to 5 for the specification α is 1/5 = 0.2. For example, a reciprocal of the number of slots is obtained. For the specification β, the probability in each slot is 0. For the product B, since the specifications are the specifications α and β, for the specification α, the probability for each of the slots 1 to 5 is 1/5 = 0.2, and for the specification β, the probability in each slot is 0.2. For the product H, since the specification is only the specification β, the probability for the specification β for each of the slots 4 to 8 is 1/5 = 0.2. For the specification α, the probability in each slot is 0. Similarly, the probability is calculated for other products.

Next, for each specification, the probabilities in each slot are totaled. Next, for each slot number, cumulative sums of the probabilities are totaled for each specification. For example, for the specification α, since a total of probabilities of the slot 1 is 0.6 and a total of probabilities of the slot 2 is 0.6, a cumulative sum of the probabilities of the slot 2 is 1.2. Because a total of the probabilities of the slot 3 is 0.6, a cumulative sum of the probabilities of the slot 3 is 1.8. Because a total of the probabilities of the slot 4 is 0.8, a cumulative sum of the probabilities of the slot 4 is 2.6. As described above, the cumulative sum is obtained.

By treating the obtained cumulative sum as the target number of appearances and performing the target tracking method, a production order is planned.

As described above, according to the first embodiment, in the planning of the production order in the mixed production method, even when the period constraints partially overlap each other, it is possible to plan a production order that satisfies a specification constraint while observing a period constraint. It is possible to obtain the production order satisfying the period constraint while maintaining the specification constraint in the target tracking method. Since it is not desired to consider the case division or the like of the number of products included in each section, an enormous amount of calculation time is not taken. From the above, it is possible to improve the quality, cost, and productivity of the production line of the mixed production method.

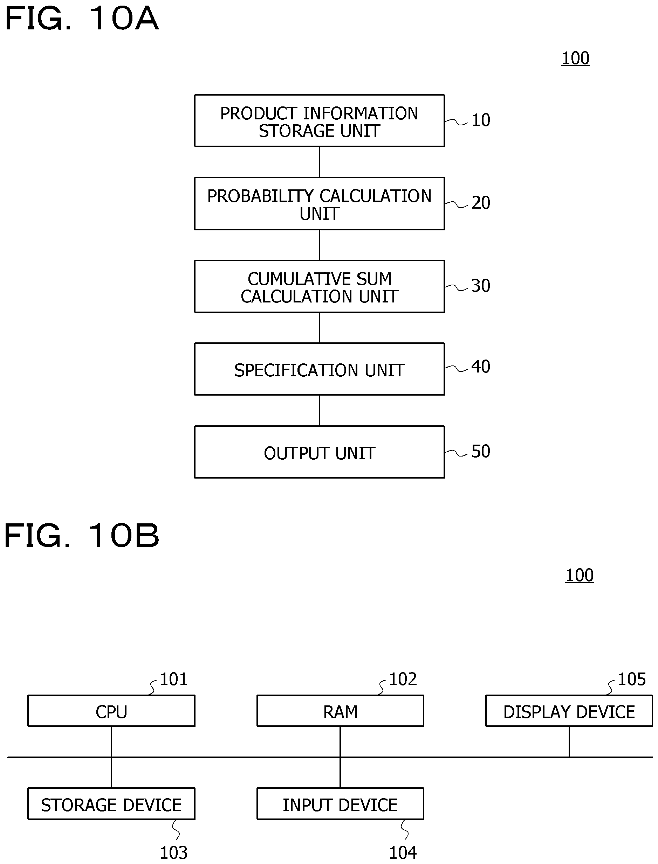

FIG. 10A is a block diagram illustrating an overall configuration of an information processing apparatus 100 according to the first embodiment. As illustrated in FIG. 10A, the information processing apparatus 100 includes a product information storage unit 10, a probability calculation unit 20, a cumulative sum calculation unit 30, a specification unit 40, an output unit 50, and the like.

FIG. 10B is a block diagram illustrating a hardware configuration of the information processing apparatus 100. As illustrated in FIG. 10B, the information processing apparatus 100 includes a central processing unit (CPU) 101, a random-access memory (RAM) 102, a storage device 103, an input device 104, a display device 105, and the like.

The CPU 101 is a central processing unit. The CPU 101 includes one or more cores. The RAM 102 is a volatile memory that temporarily stores a program executed by the CPU 101, data processed by the CPU 101, and the like. The storage device 103 is a nonvolatile storage device. As the storage device 103, for example, a read-only memory (ROM), a solid-state drive (SSD) such as a flash memory, a hard disk driven by a hard disk drive, or the like may be used. The storage device 103 stores a planning program. The input device 104 is an input device such as a keyboard or a mouse. The display device 105 is a display device such as a liquid crystal display (LCD). By the CPU 101 executing the planning program, the product information storage unit 10, the probability calculation unit 20, the cumulative sum calculation unit 30, the specification unit 40, and the output unit 50 are realized. Hardware such as dedicated circuits may be used as the product information storage unit 10, the probability calculation unit 20, the cumulative sum calculation unit 30, the specification unit 40, and the output unit 50.

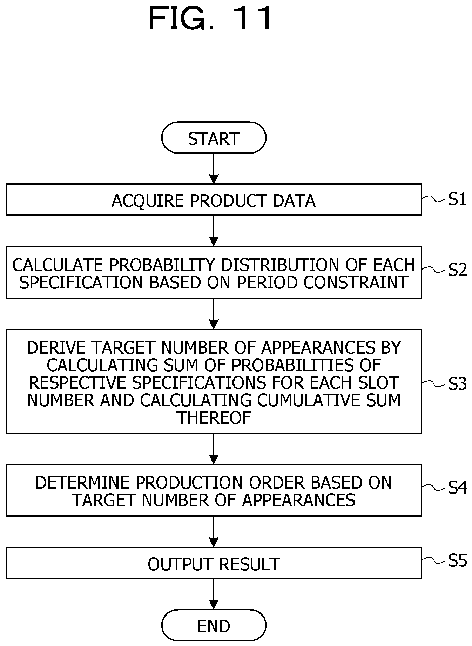

FIG. 11 is a flowchart illustrating an example of processing that is executed by the information processing apparatus 100. The probability calculation unit 20 acquires product data from the product information storage unit 10 (step S1). As described in FIG. 1, in the product data, a specification constraint and a period constraint are associated with a product ID. For example, the product ID, the specification constraint, and the period constraint may be input by the user using the input device 104.

Next, by using the product data acquired in step S1, the probability calculation unit 20 calculates a probability distribution of each specification based on the period constraint (step S2).

Next, the cumulative sum calculation unit 30 calculates a target number of appearances by calculating a sum of probabilities of the respective specifications for each slot number by using the probability distribution calculated in step S2 and calculating a cumulative sum (step S3).

Next, based on the target number of appearances calculated in step S3, the specification unit 40 specifies a production order of products in the production line (step S4).

Next, the output unit 50 outputs the production order specified in step S4 (step S5). For example, the output production order is displayed on the display device 105.

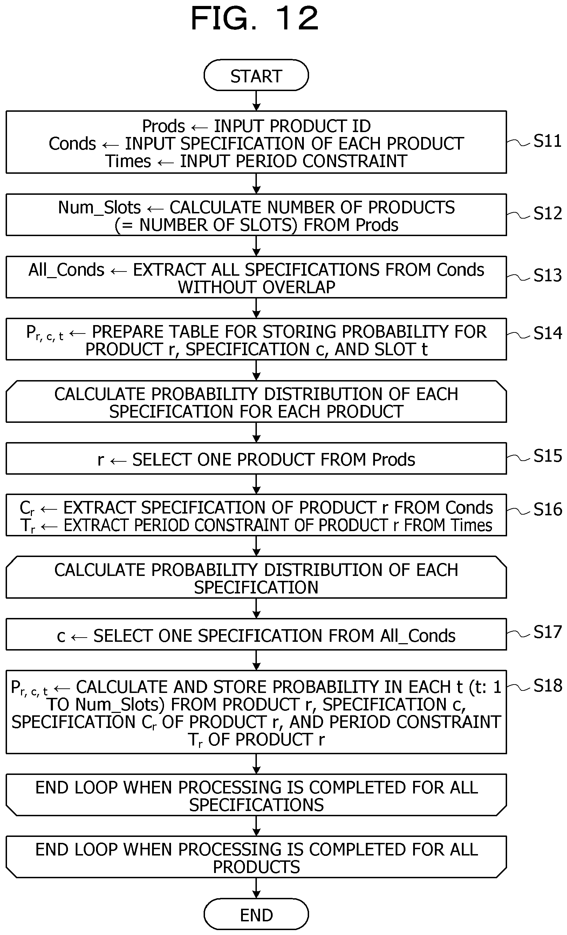

FIG. 12 is a diagram illustrating a flowchart representing details of step S2. As illustrated in FIG. 12, the probability calculation unit 20 inputs each product ID to Prods representing a set of product IDs, inputs a specification of each product to Conds representing a set of specifications of each product, and inputs a period constraint of each product to Times representing a set of period constraints of each product (step S11).

Next, the probability calculation unit 20 calculates a number of products Num_Slots from Prods (step S12). The number of products Num_Slots is the number of products included in Prods, and corresponds to the number of slots at which the product is input to a production line.

Next, the probability calculation unit 20 extracts all specifications All_Conds from Conds such that there is no overlap (step S13).

Next, the probability calculation unit 20 prepares a table P_{r, c, t} for storing a probability in a product r, a specification c, and a slot number t (step S14).

Next, the probability calculation unit 20 selects one product from Prods (step S15). The selected product is referred to as a product r.

Next, the probability calculation unit 20 extracts a specification of the product r from Conds and extracts a period constraint of the product r from Times (step S16). The extracted specification is referred to as a specification Cᵣ. The extracted period constraint is referred to as a period constraint Tᵣ.

Next, the probability calculation unit 20 selects one specification from All_Conds (step S17). The selected specification is referred to as a specification c.

Next, the probability calculation unit 20 calculates a probability in each slot number t from the product r, the specification c, the specification Cᵣ of the product r, and the period constraint Tᵣ of the product r, and stores the probability in the table P_{r, c, t} (step S18). The slot number t is each number from 1 to Num_Slots.

Steps S17 and S18 are executed for all the specifications, and the loop ends when steps S17 and S18 are completed for all the specifications. Accordingly, the probability distribution of each specification is calculated. Steps S15 to S18 are executed for all the products, and the loop ends when steps S15 to S18 are completed for all the products. Accordingly, the probability distribution of each specification is calculated for each product.

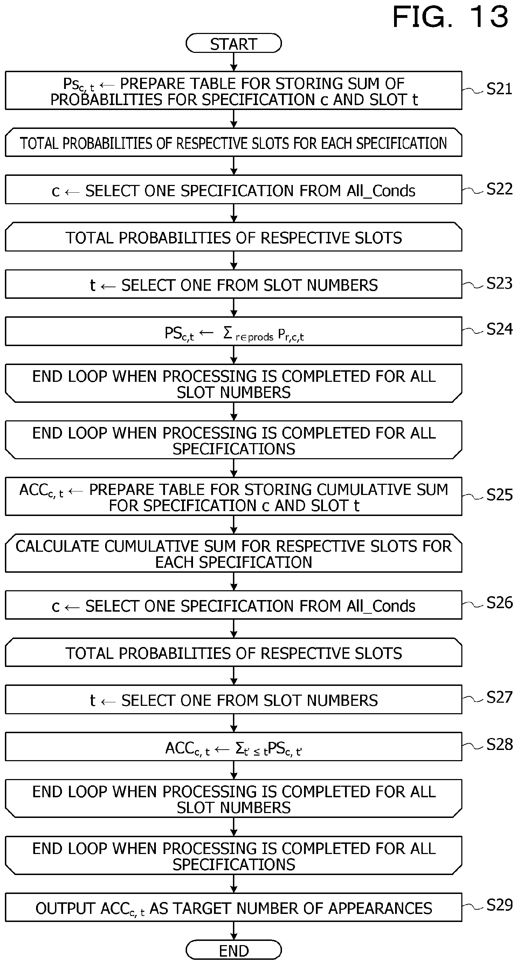

FIG. 13 is a diagram illustrating a flowchart representing details of step S3. As illustrated in FIG. 13, the cumulative sum calculation unit 30 prepares a table PS_{c, t} for storing a sum of probabilities for the specification c and the slot number t (step S21).

Next, the cumulative sum calculation unit 30 selects one specification from All_Conds (step S22). The selected specification is referred to as a specification c.

Next, the cumulative sum calculation unit 30 selects one from the slot numbers (step S23). The selected slot number is referred to as a slot number t.

Next, the cumulative sum calculation unit 30 calculates PS_{c, t} = Σ_{r ε Prods}P_{r, c, t} (step S24).

Steps S23 and S24 are executed for all the slot numbers, and the loop ends when steps S23 and S24 are completed for all the slot numbers. Accordingly, the probabilities of the respective slots are totaled. Steps S22 to S24 are executed for all the specifications, and the loop ends when steps S22 to S24 are completed for all the specifications. As a result, the probabilities of the respective slots are totaled for each specification.

Next, the cumulative sum calculation unit 30 prepares a table ACC_{c, t} for storing a cumulative sum for the specification c and the slot number t (step S25).

Next, the cumulative sum calculation unit 30 selects one specification from All_Conds (step S26). The selected specification is referred to as a specification c.

Next, the cumulative sum calculation unit 30 selects one slot number (step S27). The selected slot number is referred to as a slot number t.

Next, the cumulative sum calculation unit 30 calculates Σ_{t'} ≤ ₜPS_{c, t'} and stores the result in the table ACC_{c, t} (step S28).

Steps S27 and S28 are executed for all the slot numbers, and the loop ends when steps S27 and S28 are completed for all the slot numbers. Accordingly, the probabilities of the respective slots are totaled. Steps S26 to S28 are executed for all the specifications, and the loop ends when steps S26 to S28 are completed for all the specifications. As a result, the cumulative sums of the respective slots are totaled for each specification.

Next, the cumulative sum calculation unit 30 outputs ACC_{c, t} as the target number of appearances (step S29).

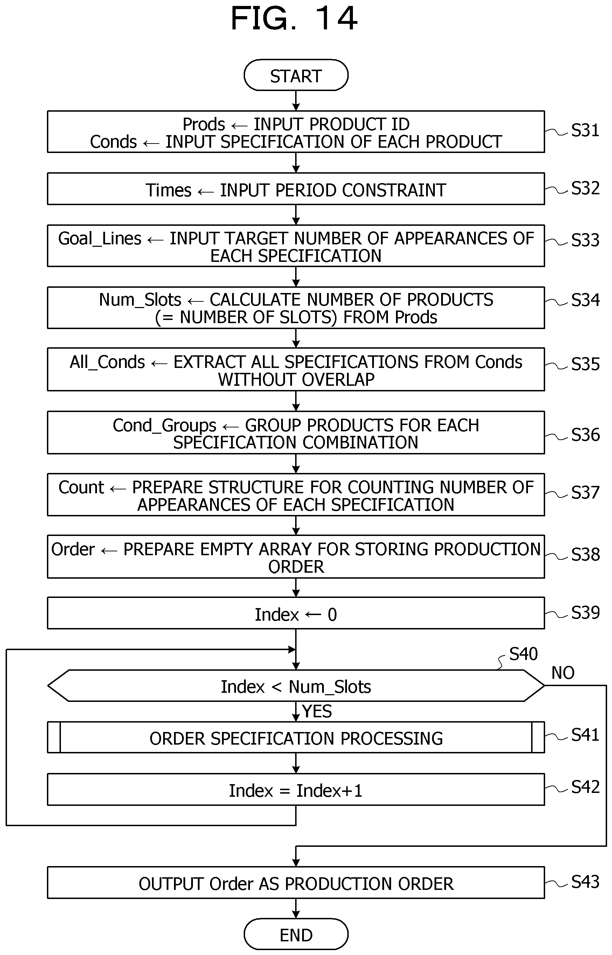

FIG. 14 is a diagram illustrating a flowchart representing details of step S4. As illustrated in FIG. 14, the specification unit 40 inputs each product ID to Prods representing a set of product IDs, and inputs a specification of each product to Conds representing a set of specifications of each product (step S31).

Next, the specification unit 40 inputs a period constraint of each product to Times representing a set of period constraints of respective products (step S32).

Next, the specification unit 40 inputs a target number of appearances of each specification to Goal_Lines representing a set of target number of appearances of each specification (step S33).

Next, the specification unit 40 calculates a number of products Num_Slots from Prods (step S34). The number of products Num_Slots is the number of products included in Prods, and corresponds to the number of slots at which the product is input to a production line.

Next, the specification unit 40 extracts all specifications All_Conds from Conds such that there is no overlap (step S35).

Next, the specification unit 40 groups the products for each specification combination, and inputs the group to Cond_Groups representing a set of individual groups (step S36). For example, in the product data in FIG. 1, a group having only the specification α, a group having only the specification β, and a group having the specifications α and β are created.

Next, the specification unit 40 prepares a structure Count for counting the number of appearances of each specification (step S37).

Next, the specification unit 40 prepares an empty array Order for storing a production order in a production line (step S38).

Next, the specification unit 40 sets Index to "0" (step S39).

Next, the specification unit 40 determines whether or not Index is smaller than the number of products Num_Slots (step S40).

When "Yes" is determined in step S40, the specification unit 40 executes order specification processing (step S41). Details of the order specification processing will be described later.

Next, the specification unit 40 sets a value of Index to Index + 1 (step S42). After that, the processing is executed again from step S40.

When "No" is determined in step S40, the output unit 50 outputs Order as a production order in the production line (step S43).

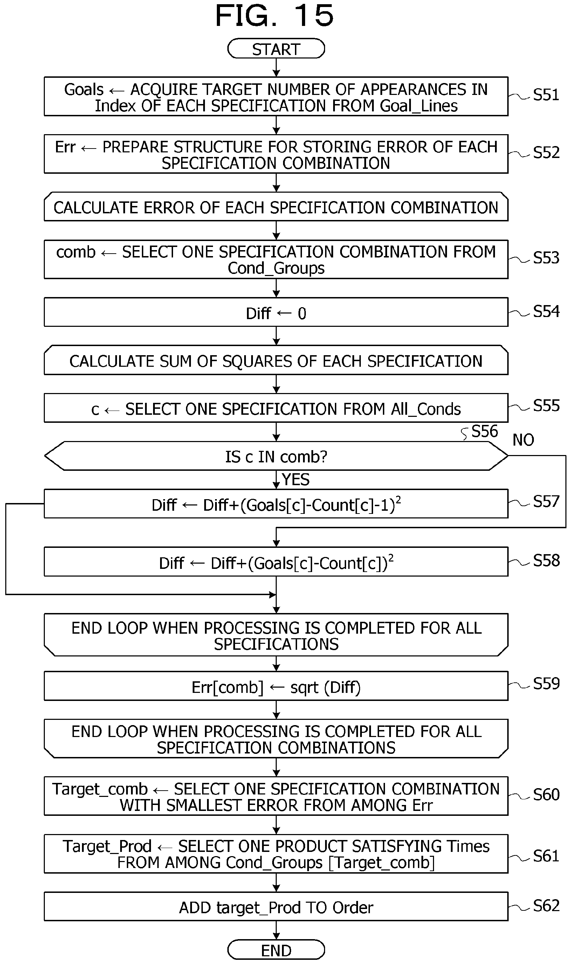

FIG. 15 is a diagram illustrating a flowchart representing details of the order specification processing in step S41. As illustrated in FIG. 15, the specification unit 40 acquires the target number of appearances in Index of each specification from Goal_Lines (step S51). The acquired target number of appearances is referred to as a target number of appearances Goals.

Next, the specification unit 40 prepares a structure Err for storing an error of each specification combination (step S52).

Next, the specification unit 40 selects one specification combination from Cond_Groups (step S53). The selected combination is referred to as a combination comb.

Next, the specification unit 40 sets Diff to 0 (step S54).

Next, the specification unit 40 selects one specification from All_Conds (step S55). The selected specification is referred to as a specification c.

Next, the specification unit 40 determines whether or not the specification c selected in step S55 is included in comb selected in step S53 (step S56).

When "Yes" is determined in step S56, the specification unit 40 sets Diff to Diff + (Goals [c] - Count [c]-1)² (step S57).

When "No" is determined in step S56, the specification unit 40 sets Diff to Diff + (Goals [c] - Count [c])² (step S58).

Steps S55 to S58 are executed for all the specifications, and the loop ends when steps S55 to S58 are completed for all the specifications. Accordingly, the sum of squares for each specification is calculated.

Next, the specification unit 40 calculates a square root of Diff, sqrt (Diff), as Err [comb] (step S59).

Steps S53 to S59 are executed for all the specification combinations, and the loop ends when steps S53 to S59 are completed for all the specification combinations. Accordingly, the error of each specification combination is calculated.

Next, the specification unit 40 selects one specification combination having a smallest error in Err (step S60). The selected specification combination is referred to as Target_comb.

Next, the specification unit 40 selects one product that satisfies Times from among Cond_Groups [Target_comb] (step S61). The selected product is referred to as Target_Prod.

Next, the specification unit 40 adds Target_Prod to the end of Order (step S62).

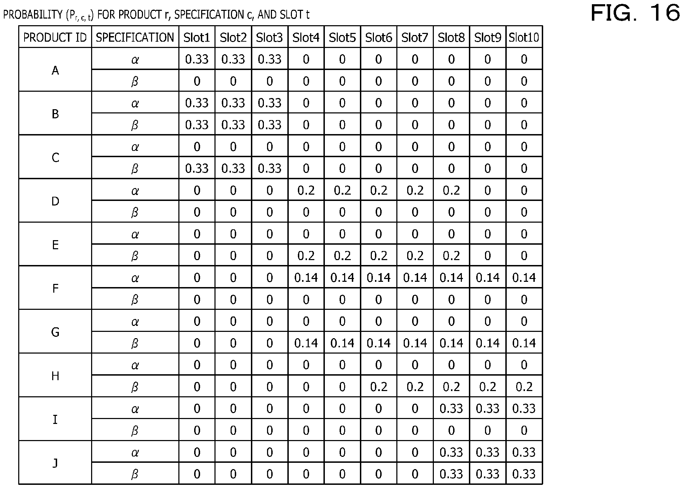

A calculation example of the production order according to the present embodiment will be described. The product data described with reference to FIG. 1 is used. FIG. 16 is a probability distribution obtained for the product data in FIG. 1. For each product, a probability P_{r, c, t} for the product r, the specification c, and the slot number t is calculated. For example, the probabilities of the specifications α and β in each slot are calculated.

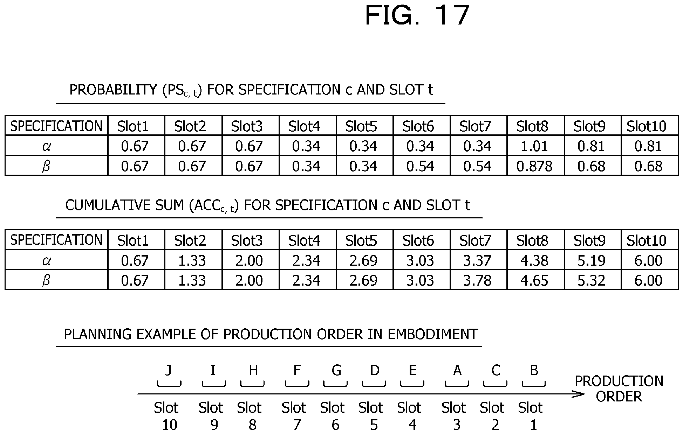

An upper part of FIG. 17 illustrates calculation results of a probability PS_{c, t} for the specification c and the slot number t. A middle part of FIG. 17 illustrates calculation results of a cumulative sum ACC_{c, t} for the specification c and the slot number t. A lower part of FIG. 17 illustrates a production order planned by the method of the first embodiment.

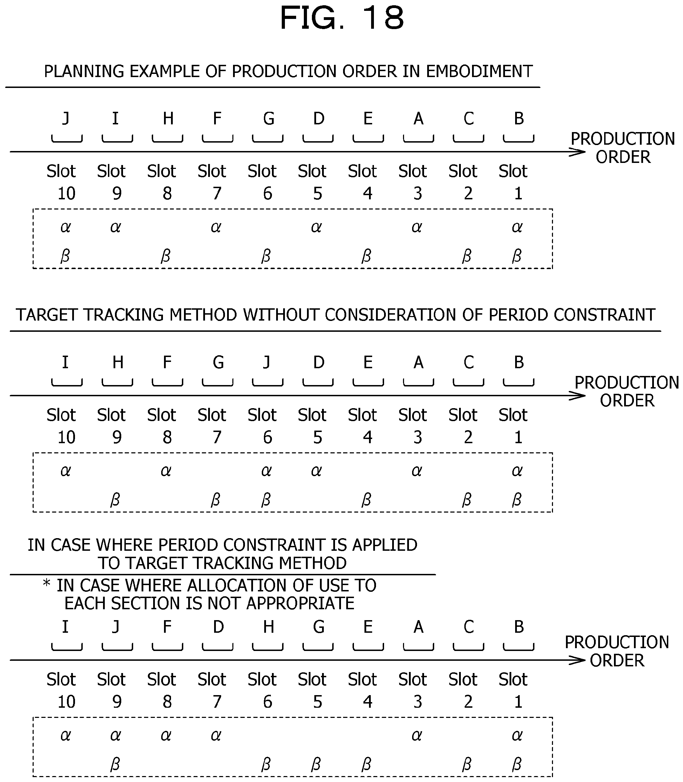

An upper part of FIG. 18 is obtained by adding the specifications of each product to the production order in the lower part of FIG. 17. As illustrated in the upper part of FIG. 18, it may be seen that the individual specifications are arranged in a distributed manner. This production order satisfies the period constraint in FIG. 1.

A middle part of FIG. 18 illustrates an example in which the production order is calculated by the target tracking method without consideration of the period constraint. As illustrated in the middle part of FIG. 18, the specifications are arranged in a distributed manner, but the product J does not observe the period constraint in FIG. 1. As described above, in the target tracking method without consideration of the period constraint, there may be a product that does not observe the period constraint.

A lower part of FIG. 18 illustrates an example in which the production order is calculated by simply applying the period constraint to the target tracking method. As illustrated in the lower part of FIG. 18, although the calculated production order satisfies the period constraint, it is not possible to distribute the specifications.

From these results, it may be seen that, by the method according to the present embodiment, a production order that distributes specifications while observing a period constraint is obtained without trying the allocation of the specifications to each section for all patterns.

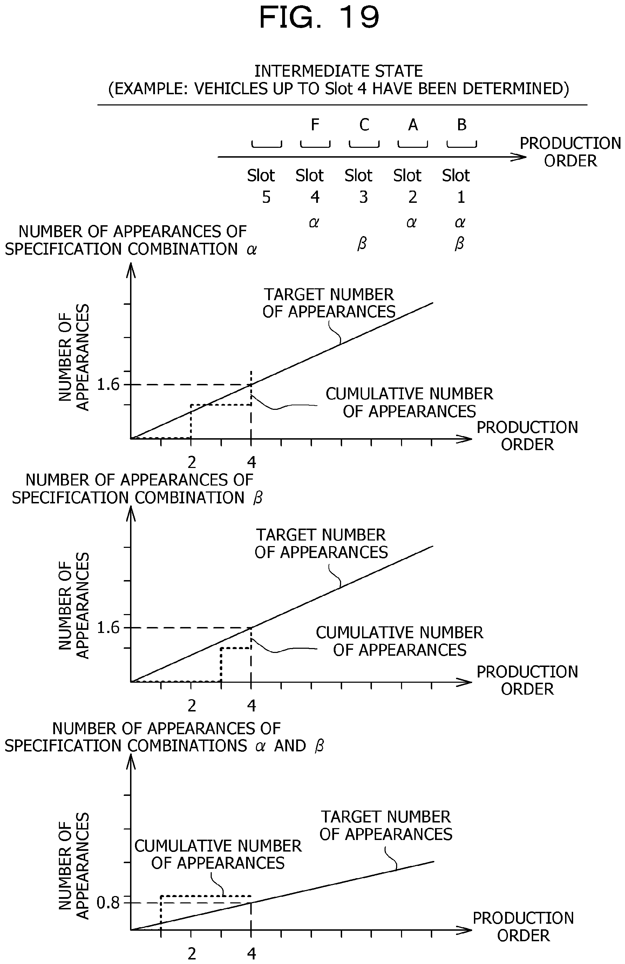

Although the target tracking method is applied when the production order is specified in the above-described embodiment, the embodiment is not limited thereto. For example, tally calculation may be applied when the production order is specified. For example, as illustrated in FIG. 19, the tally calculation is a method of sequentially determining an appearance order of the products such that the cumulative number of appearances of a specification combination of each product does not deviate from the target number of appearances over a production line. In this case, when the product of the slot number 5 is specified, a difference from the target number of appearances is 1.6 - 2 = -0.4 for the specification combination o, 1.6 - 1 = 0.6 for the specification combination β, and 0.8 - 1 = -0.2 for the specification combinations α and β. Accordingly, one of the products E, G, and H having the specification β with the largest difference is selected. The above-described embodiment may be applied to such tally calculation when the production order is specified.

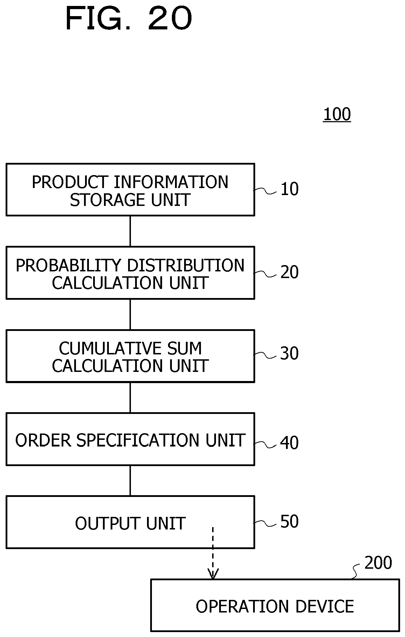

Although the result output by the output unit 50 is output to the display device 105 in each of the above examples, the result may be output to an operation device 200. FIG. 20 is a block diagram illustrating this case. The operation device 200 is a belt conveyor or the like for transporting each product to each device in each step in a production line. As illustrated in FIG. 20, the result output by the output unit 50 is output to the operation device 200. The operation device 200 operates such that an optimum solution received from the output unit 50 is realized. The operation device 200 includes a CPU, a RAM, a storage device, and the like, and for example, a control program or the like for controlling an operation or the like of the operation device 200 is stored in the storage device, the optimum solution received from the output unit 50 is stored in the RAM, and the CPU controls the operation of the operation device 200 based on the control program and the optimum solution.

In each of the above examples, a plurality of products input to the production line are examples of a plurality of objects. A slot is an example of a plurality of processing timings for which an order is determined. Specifications α and β, and the like are examples of processing specifications defined for each product. A slot defined for each product is an example of a processing period. The probability calculation unit 20 is an example of a probability calculation unit that calculates a probability obtained as a reciprocal of the number of processing timings included in a processing period for each processing specification of the plurality of objects, for each processing timing, and calculates a sum of probabilities of the processing specifications for each processing timing. The cumulative sum calculation unit 30 is an example of a cumulative sum calculation unit that calculates a cumulative sum of sums of the probabilities for the processing timing. The specification unit 40 is an example of a specification unit that specifies the processing timings of the plurality of objects by using the cumulative sum.

Although the embodiment of the present disclosure has been described in detail above, the present disclosure is not limited to such a particular embodiment and may be variously modified and changed within the scope of the gist of the present disclosure described in claims.

## Claims

1. A computation program comprising instructions which, when executed by a computer, cause the computer to execute computation processing comprising:
on a condition that each of a plurality of objects is processed at any of a plurality of processing timings for which an order is determined, a processing specification is determined for each of the plurality of objects, a processing period in which processing is performed for each of the plurality of objects is determined, and the processing period includes one or more of the processing timings,
calculating a probability obtained as a reciprocal of a number of the processing timings included in the processing period for each of the processing specifications of the plurality of objects, for each processing timing;
calculating a sum of probabilities of the processing specifications for each processing timing; and
calculating a cumulative sum of sums of the probabilities for the processing timing; and
specifying the processing timings of the plurality of objects by using the cumulative sum.

2. The computation program according to claim 1, wherein
for at least two of the plurality of objects, the processing periods partially overlap each other.

3. The computation program according to claim 1, the computation processing further comprising:
selecting a next object by using a difference from a cumulative number of appearances of the processing specification in a case where the next object is selected by using, as a reference, a relationship between the processing timing and the cumulative sum when the processing timings of the plurality of objects are sequentially specified.

4. The computation program according to claim 1, the computation processing further comprising:
selecting a next object such that a sum of squares of a difference from a cumulative number of appearances of the processing specification in a case where the next object is selected by using, as a reference, a relationship between the processing timing and the cumulative sum is minimized when the processing timings of the plurality of objects are sequentially specified.

5. A computation method implemented by a computer, the computation method comprising:
on a condition that each of a plurality of objects is processed at any of a plurality of processing timings for which an order is determined, a processing specification is determined for each of the plurality of objects, a processing period in which processing is performed for each of the plurality of objects is determined, and the processing period includes one or more of the processing timings,
calculating a probability obtained as a reciprocal of a number of the processing timings included in the processing period for each of the processing specifications of the plurality of objects, for each processing timing;
calculating a sum of probabilities of the processing specifications for each processing timing; and
calculating a cumulative sum of sums of the probabilities for the processing timing; and
specifying the processing timings of the plurality of objects by using the cumulative sum.

6. An information processing apparatus comprising:
a probability calculation unit configured to perform:
on a condition that each of a plurality of objects is processed at any of a plurality of processing timings for which an order is determined, a processing specification is determined for each of the plurality of objects, a processing period in which processing is performed for each of the plurality of objects is determined, and the processing period includes one or more of the processing timings,
calculating a probability obtained as a reciprocal of a number of the processing timings included in the processing period for each of the processing specifications of the plurality of objects, for each processing timing, and
calculating a sum of probabilities of the processing specifications for each processing timing; and
a cumulative sum calculation unit configured to perform calculating a cumulative sum of sums of the probabilities for the processing timing; and
a specification unit configured to perform specifying the processing timings of the plurality of objects by using the cumulative sum.
